# EUROPÄISCHE PATENTSCHRIFT

(11) **EP 1 206 031 B1**
(45) Veröffentlichungstag und Bekanntmachung des Hinweises auf die Patenterteilung: **05.10.2005**
(21) Anmeldenummer: 01125577.5
(22) Anmeldetag: 25.10.2001
(51) Int. Cl.: H02P 5/00, G05B 15/02

(54) **Verfahren und Vorrichtung zur automatischen Zuordnung eines Motorgebers zu einem Leistungsteil innerhalb eines elektrischen Antriebssystems**
Method and device to automatically allocate a magnetic sensor to a power unit within an electric drive system
Méthode et dispositif pour attribuer automatiquement un capteur magnétique à une unité de puissance dans un système d'entraînement électrique

(30) Priorität: 13.11.2000 DE 10056146
(43) Veröffentlichungstag der Anmeldung: 15.05.2002
(73) Patentinhaber: SIEMENS AKTIENGESELLSCHAFT, 80333 München (DE)
(72) Erfinder: Jänicke, Peter, 91058 Erlangen (DE)

(56) Entgegenhaltungen:
- DE-A- 19 845 657
- DE-A- 19 903 869

## Beschreibung

Die Erfindung betrifft ein Verfahren zur automatischen Zuordnung eines Motorgebers zu einem Leistungsteil innerhalb eines elektrischen Antriebssystems sowie ein korrespondierendes elektrisches Antriebssystem.

In der industriellen Automatisierungstechnik mit elektrischen Antrieben, insbesondere solchen mit einem Verbund von mehreren in der Regel gekoppelten elektrischen Antrieben wie sie bei numerisch gesteuerten Werkzeugmaschinen und Robotern vorkommen, stellt sich häufig das Problem einer Zuordnung zwischen einem Leistungsteil und dem an diesem Leistungsteil angeschlossen Motorgeber.

Gerade bei einer Vielzahl von elektrischen Antrieben mit zugeordneten Gebersystemen besteht nämlich bei der Inbetriebnahme ein erhebliches Risiko einer Fehlzuordnung durch falschen Anschluss etc., der Gefahren für den Bediener eines z.B. Roboters nach sich ziehen kann.

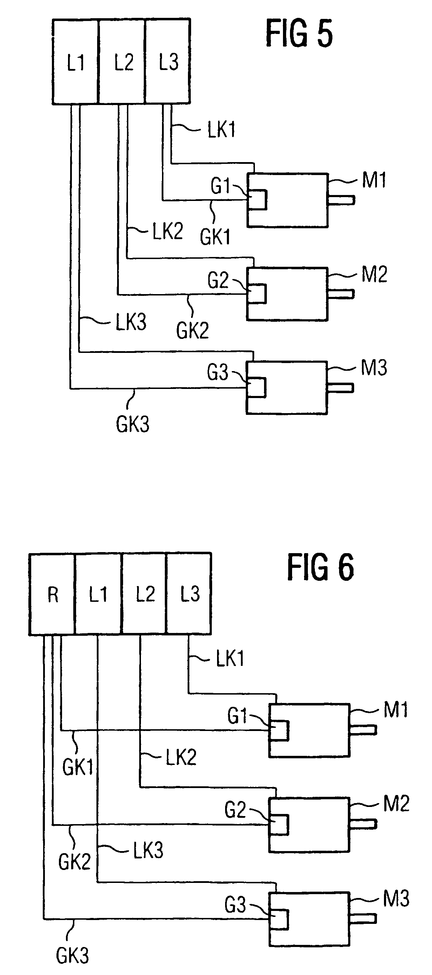

Die Darstellung nach FIG 5 zeigt beispielhaft einen solchen herkömmlichen Antriebsverband mit drei Motoren M1 bis M3, die von jeweils zugeordneten Leistungsteilen L1 bis L3 über jeweilige Leistungskabel LK1 bis LK3 gespeist werden. Jeder Motor M1, M2, M3 verfügt über einen zugeordneten Motorgeber G1, G2 und G3, der über ein jeweiliges Geberkabel GK1 bis GK3 mit dem zugehörigen Leistungsteil L1 bis L3 verbunden ist. Auf diese Weise besteht jeweils ein Regelkreis zur Steuerung jedes Motors M1 bis M3.

Üblicherweise ist somit an einem Leistungsteil L1 bis L3 neben dem Leistungsanschluss LK1 bis LK3 auch ein Anschluss GK1 bis GK3 für den Motorgeber G1 bis G3 vorhanden. Jeder Motorgeber G1 bis G3 muss an die zugeordnete Geberschnittstelle GK1 bis GK3 korrekt angeschlossen werden, eine andere Zuordnung ist für eine technisch korrekte Funktion nicht möglich.

Falls zum Beispiel bei zwei Achsen die Motorgeberanschlüsse GK1, GK2, GK3 vertauscht werden, kann dieser Fehler nicht ohne Bewegung der Motoren M1 bis M3 festgestellt werden. Dies birgt ein nicht unbeträchtliches Gefährdungspotential für einen Bediener einer Maschine mit einem solchen Antriebsverband.

Aufgabe der vorliegenden Erfindung ist es daher, eine Möglichkeit zur automatischen Zuordnung zwischen einem Leistungsteil und dem an diesem Leistungsteil angeschlossen Motorgeber zu schaffen.

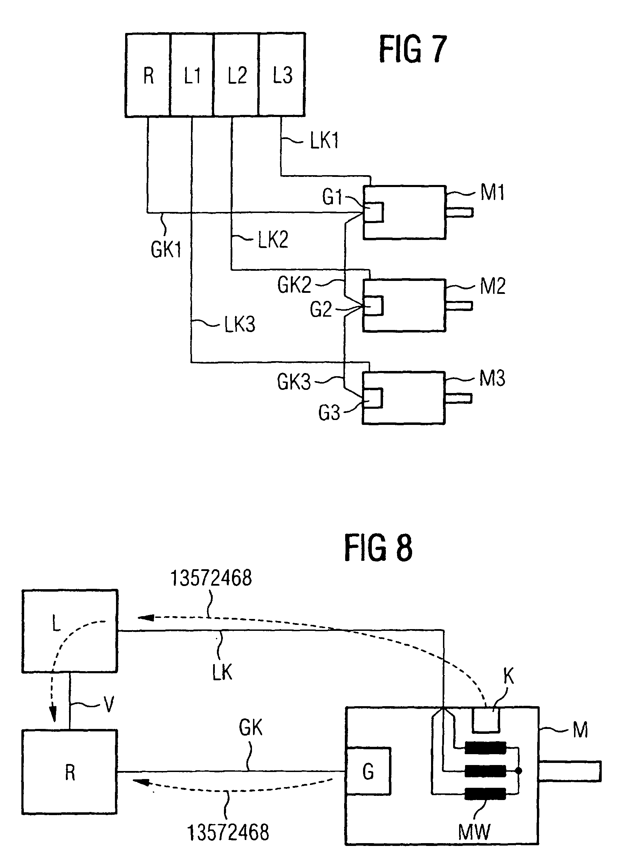

Damit wären auch flexible Anschlussvarianten möglich, wie sie in den Darstellungen nach FIG 6 und FIG 7 skizziert sind. Diese besitzen im wesentlichen den in FIG 5 gezeigten Aufbau mit den dort beschriebenen Elementen. FIG 6 jedoch zeigt die Auswertung alle Motorgeber G1 bis G3 auf einer zentralen Regelungseinheit R, die allen drei Leistungsteilen L1 bis L3 zur Ansteuerung dient. Dementsprechend sind auch alle Geberschnittstellen GK1 bis GK3 zur Regelungseinheit R geführt.

FIG 7 zeigt eine Kaskadierung von Motorgebern MG1 bis MG3. Dabei ist ebenfalls die bereits in FIG 6 gezeigte Regelungseinheit R vorgesehen, jedoch sind nicht getrennt von jedem Motorgeber MG1 bis MG3 eigene Geberkabel GK1 bis GK3 zur Regelungseinheit R geführt, sondern es ist eine Kommunikationsschnittstelle vorgesehen. Über diese sind die Motorgeber G1 bis G3 beispielsweise in Linientopologie über ein Bussystem oder durch Punkt-zu-Punkt-Verbindungen miteinander vernetzt. Nur der erste Motorgeber G1 in der Linie ist mit der Regelungseinheit R verbunden. Weitere Motorgeber G2, G3 sind in Kaskade, beispielsweise mittels einer seriellen Verbindung, mit dem jeweils vorangehenden Motorgeber verbunden, also G2 mit G1 und G3 mit G2 usw..

Eine Zuordnung zwischen einem Leistungsteil und dem zugehörigen Motorgeber ist herkömmlich nur über eine Parametrierung dieser Elemente möglich. In diesem Fall ist vom Inbetriebnehmer aber eine zusätzliche Handlung verlangt, die bei bisherigen Konzepten, wie in FIG 5 gezeigt, nicht notwendig ist. Außerdem können dabei wiederum Fehler bei der Zuordnung passieren, die nicht erkannt werden.

Mit modernen Antriebssystemen werden zunehmend auch neue Geberschnittstellen eingeführt, die die in den FIG 6 und 7 gezeigten Konfigurationen möglich machen. Daher macht es sich die vorliegende Erfindung auch zur Aufgabe, eine einfache Inbetriebnahme für solche Konfigurationen zu schaffen.

Gemäß der vorliegenden Erfindung wird diese Aufgabe durch ein Verfahren zur automatischen Zuordnung eines Motorgebers zu einem Leistungsteil innerhalb eines elektrischen Antriebssystems gelöst, indem aus einer Regelungseinheit, dem Leistungsteil, einem Motor und dem Motorgeber ein geschlossener Kreis gebildet wird, wobei die Regelungseinheit über das Leistungsteil ein Merkmal überträgt, das über den geschlossenen Kreis aus Leistungsteil, Motor und Motorgeber wieder zurück an die Regelungseinheit geleitet wird, wo eine Regelkreisstruktur mit der tatsächlichen Verdrahtung verglichen wird.

Dabei hat es sich als besonders günstig für eine einfache Realisierung erwiesen, wenn als Merkmal ein Impuls, insbesondere ein Spannungsimpuls, vorgegeben wird, der eindeutig identifizierbar ist. Alternativ kann jedoch als Merkmal auch ein eindeutiger Kennwert vorgegeben wird.

Besonders effektiv ist das erfindungsgemäße Verfahren, wenn über das Leistungsteil gleichzeitig auf allen Phasen des Motors ein identischer Impuls ausgegeben wird.

Dadurch wird eine technisch sehr effektive Realisierung eines Vergleichs der Regelkreisstruktur mit der tatsächlichen Verdrahtung ermöglicht, indem die Regelungseinheit den Motorgeber dahingehend auswertet, ob der Impuls aufgetreten ist.

Alternativ kann die Aufgabe der Erfindung auch durch ein Verfahren zur automatischen Zuordnung eines Motorgebers zu einem Leistungsteil innerhalb eines elektrischen Antriebssystems gelöst werden, indem aus einer Regelungseinheit, dem Leistungsteil, einem Motor und dem Motorgeber ein geschlossener Kreis gebildet wird, wobei die Regelungseinheit über den Motorgeber ein Merkmal überträgt, das über den geschlossenen Kreis aus Motorgeber, Motor und Leistungsteil wieder zurück an die Regelungseinheit geleitet wird, wo die Regelkreisstruktur mit der tatsächlichen Verdrahtung verglichen wird.

Auch in diesem Fall hat es sich als besonders günstig für eine einfache Realisierung erwiesen, wenn als Merkmal ein Impuls, insbesondere ein Spannungsimpuls, vorgegeben wird, der eindeutig identifizierbar ist. Alternativ kann jedoch als Merkmal auch ein eindeutiger Kennwert vorgegeben wird.

Im Fall dieser Kommunikationsrichtung lässt sich als Alternative zu kostenträchtigen Zusatzleitungen eine einfache technische Übertragung über eine vorhandene Leistungsleitung erreichen, wenn der Motor und das Leistungsteil über eine Leistungsleitung verbunden sind, auf die das Merkmal zur Übertragung aufmoduliert wird.

Da häufig aufgrund von Anforderungen zur Erfüllung von Sicherheitsrichtlinien und Normen eine sichere elektrische Trennung in einem Antriebssystem gefordert ist, was jedoch die Realisierung eines geschlossenen Kreises zwischen den im vorangehenden beschriebenen Komponenten erschwert, werden erfindungsgemäß Überkopplungen durch parasitäre Kapazitäten zur Überwindung der sicheren elektrischen Trennung innerhalb des geschlossenen Kreises genutzt.

Im Falle einer Kommunikation in Richtung Leistungsteil zum Motor hat es sich dabei als günstig herausgestellt, wenn zur Überwindung einer sicheren elektrischen Trennung zwischen dem Motor und dem Motorgeber ein in der Motorwicklung angeordneter Temperatursensor genutzt wird, der von der Regelungseinheit über den Motorgeber auf eine durch eine parasitäre Kapazität bedingte Überkopplung des Impulses ausgewertet wird.

Im Fall einer Realisierung in umgekehrter Kommunikationsrichtung kann zur Überwindung einer sicheren elektrischen Trennung zwischen dem Motor und dem Motorgeber ebenfalls ein in der Motorwicklung angeordneter Temperatursensor genutzt werden, wenn dieser von der Regelungseinheit über den Motor und das Leistungsteil auf eine durch eine parasitäre Kapazität bedingte Überkopplung des Impulses ausgewertet wird.

Alternativ kann das Problem mit einer sicheren elektrischen Trennung gelöst werden, wenn der Motor über eine Leistungsleitung mit dem Leistungsteil verbunden ist, wobei der Motorgeber über das Leistungsteil mit Spannung versorgt wird und die Leitungen zur Spannungsversorgung des Motorgebers ebenfalls in der Leistungsleitung angeordnet sind, indem zur Überwindung einer sicheren elektrischen Trennung zwischen dem Motor und dem Motorgeber Überkopplungen durch parasitäre Kapazitäten zwischen den Leitungen zur Spannungsversorgung des Motors und den Leitungen zur Spannungsversorgung des Motorgebers innerhalb der Leistungsleitung genutzt werden.

Die vorangehend beschriebene Aufgabe der vorliegenden Erfindung wird auch durch ein elektrisches Antriebssystem mit einem Motor, einem Leistungsteil, einer Regelungseinheit und einem Motorgeber gelöst, die miteinander so verbunden sind, dass diese einen geschlossenen Kreis bilden, in dem von der Regelungseinheit ein Merkmal so übertragbar ist, dass dieses in eine Richtung des geschlossenen Kreises aussendbar ist und aus der anderen Richtung so detektierbar ist, dass eine Regelkreisstruktur des Antriebssystems mit der tatsächlichen Verdrahtung vergleichbar ist. Besonders große Vorteile lassen sich erzielen, wenn diese Anordnung eines Antriebssystems nach dem im vorangehenden beschriebenen Verfahren nach der Erfindung betrieben wird.

Weitere Vorteile und Details zu einer Realisierung ergeben sich anhand der folgenden Darstellung möglicher Ausführungsformen und in Verbindung mit den weiteren Figuren, die die Erfindung schematisch darstellen. Dabei sind Elemente mit gleicher Funktionalität der besseren Übersichtlichkeit halber mit den gleichen Bezugszeichen gekennzeichnet. Es zeigt:
- FIG 1: ein Blockschaltbild eines Antriebssystems mit automatischer Zuordnung eines Motorgebers zu einem Leistungsteil nach der Erfindung,
- FIG 2: ein Blockschaltbild eines alternativen Antriebssystems mit automatischer Zuordnung eines Motorgebers zu einem Leistungsteil mit umgekehrter Kommunikationsrichtung,
- FIG 3: ein Blockschaltbild einer Realisierung mit Kopplung über einen Temperatursensor,
- FIG 4: ein Blockschaltbild einer Realisierung mit Kopplung über die Spannungsversorgung,
- FIG 5: ein Blockschaltbild eines herkömmlichen Antriebsverbands mit drei Motoren,
- FIG 6: ein Blockschaltbild eines Antriebsverbands mit drei Motoren und zentraler Geberauswertung,
- FIG 7: ein Blockschaltbild eines Antriebsverbands mit drei Motoren und einem Geberbussystem und
- FIG 8: ein Blockschaltbild eines alternativen Antriebssystems mit automatischer Zuordnung eines Motorgebers zu einem Leistungsteil ohne elektrische Verbindung zwischen Motor und Motorgeber.

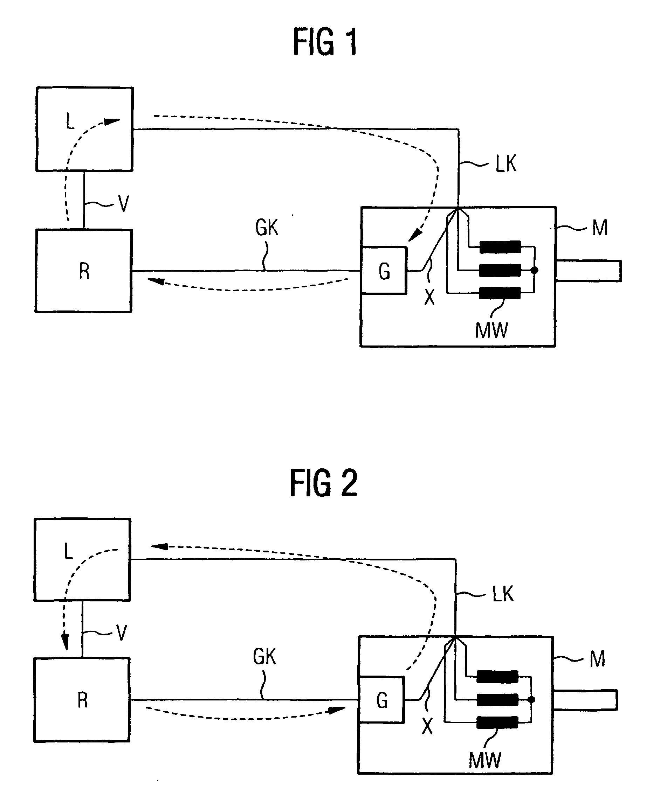

In der Darstellung nach FIG 1 ist ein Ausführungsbeispiel eines Antriebssystems mit automatischer Zuordnung eines Motorgebers zu einem Leistungsteil nach der Erfindung gezeigt. Das Blockschaltbild stellt beispielsweise einen Ausschnitt des in FIG 6 gezeigten Antriebsverbands dar, indem die Regelkreisstruktur eines Motors M mit dem zugehörigen Leistungsteil L und Motorgeber G sowie der zentralen Regelungseinheit R gezeigt sind.

Die Regelungseinheit R ist über eine Schnittstelle V mit dem Leistungsteil L, dieses über ein Leistungskabel LK mit dem Motor M verbunden, der eine dreiphasige Motorwicklung MW aufweist. Der Motorgeber G ist an den Motor M angebaut, um Beschleunigungs- und/oder Drehzahl- und/oder Lagewerte zu erfassen, die über ein Geberkabel GK an die Regelungseinheit R geliefert werden.

Erfindungsgemäß wird in diesem Regelkreis nun auch ein elektrischer Kreis geschlossen, indem eine elektrische Verbindung X zwischen dem Motor M und dem Motorgeber G geschaffen wird. Möglichkeiten hierzu werden an späterer Stelle erläutert. Problematisch ist hierbei, dass in der Regel zur Erfüllung von Sicherheitsanforderungen und Normen eine sichere elektrische Trennung in einem solchen Regelkreis vorgesehen ist, insbesondere auch zwischen dem Motor M und einem Motorgeber G.

Gemäß der vorliegenden Erfindung überträgt nun die Regelungseinheit R über das Leistungsteil L ein Merkmal, das über die Kette Leistungsleitung LK , Motor M, Motorgeber G und Geberkabel GK wieder an der Regelungseinheit R ankommt. Auf diese Art wird der Kreis geschlossen. Dieses Merkmal muss keine Kennung im Sinne einer Nummer sein, es reicht ein Impuls, der eindeutig zu identifizieren ist.

Anhand der Tatsache, dass ein ausgesendeter Impuls von der Regelungseinheit R wieder detektiert werden kann, ist sichergestellt, dass die Regelkreisstruktur mit der tatsächlichen Verkabelung der Komponenten übereinstimmt. Andernfalls kann beispielsweise eine Inbetriebnahme des Motors M gesperrt werden.

Aus dieser Vorgehensweise ergeben sich eine Reihe von Vorteilen:
- es werden keine zusätzlichen Baugruppen im Motor benötigt
- das Leistungsteil kann zur Ausgabe des Merkmals genutzt werden (vergleiche folgendes Ausführungsbeispiel)
- eine Lösung der erfindungsgemäßen Aufgabe ist ohne Änderung an den Motoren und Leistungsteilen möglich.

Grundsätzlich muss die Intelligenz zur Aussendung und zur Detektion des Merkmals nicht in einer separaten Regelungseinheit R angeordnet sein, wenngleich es sinnvoll ist einen in der Regelungseinheit R angeordneten Mikroprozessor oder Mikrocontroller für diesen Zweck mitzubenutzen. Ist in anderen Komponenten des geschlossenen Kreises ebenfalls Intelligenz angesiedelt, so stellen diese Elemente ebenfalls Regelungseinheiten im Sinne dieser Erfindung dar. Dies gilt insbesondere für den Fall, dass ein Teil der Regelungseinheit dezentral in die Leistungsteile verlagert ist. In einem solchen Fall kann dann auch diese im Leistungsteil angesiedelte Intelligenz die Funktion der Erfindung ausführen und stellt die Regelungseinheit R dar.

Eine alternative Realisierung besteht in der in FIG 2 gezeigten Anordnung, die der in FIG 1 gezeigten entspricht. Jedoch erfolgt die automatische Zuordnung von Leistungsteil L und Motorgeber G, indem die Regelungseinheit über das Geberkabel GK ein Merkmal überträgt, das über die Kette aus Motorgeber G, Motor M, Leistungsleitung LK und Leistungsteil L wieder an der Regelungseinheit R ankommt. Auf diese Art ist der Kreis ebenfalls geschlossen, jedoch ist die Kommunikationsrichtung zur Übertragung des Merkmals umgekehrt. Auch hier ist nur die Übertragung eines Impulses nötig. Ebenso kann jedoch auch ein eindeutiger Kennwert in Form einer Zahlenkombination etc. übertragen werden, wodurch aber der Aufwand steigt, weil in der Regel eine digitale Übertragung erforderlich sein wird.

Gegenüber der Realisierung nach FIG 1 ergibt sich in diesem Fall jedoch der Nachteil, dass entweder eine zusätzliche Leitung zwischen dem Motor M und dem Leistungsteil L zur Übertragung des Merkmals oder aber eine Übertragung über das Leistungskabel LK entgegen der üblichen Übertragungsrichtung zur Spannungsversorgung des Motor M erforderlich ist. Dies ist nur mit wesentlich höherem technischen Aufwand erreichbar, z.B. durch Aufmodulieren des Merkmals, etwa eines Spannungsimpulses, auf die Leistungsleitung und eine entsprechende Auswertung auf Seite des Leistungsteils L.

Als Vorteil ergibt sich bei der in FIG 2 gezeigten Realisierung:
- es ist keine zusätzliche Baugruppe im Motor erforderlich

Jedoch bestehen folgende Nachteile:
- ein Aufmodulieren von Signalen auf die Leistungsleitung oder zusätzliche Leitungen sind erforderlich
- ein Empfänger im Leistungsteil wird benötigt.

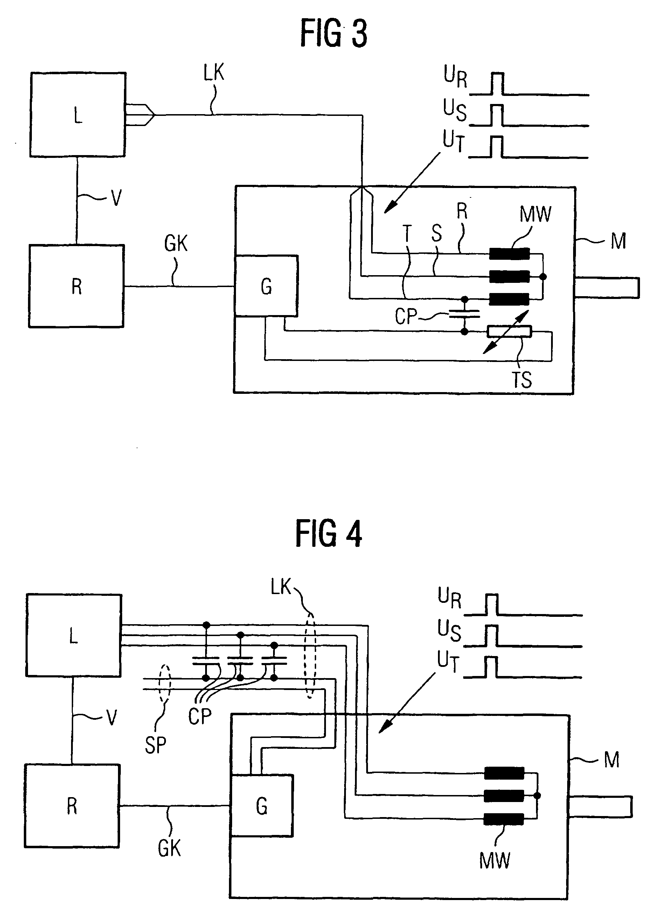

Die technische Realisierung ist mit der in FIG 1 gezeigten Alternative somit am einfachsten. Entscheidend ist die automatische Zuordnung von Leistungsteil L und Motorgeber G. Dafür sind zwei Ansätze besonders erfolgversprechend, die in den FIG 3 und 4 gezeigt sind. Beide Figuren haben denselben prinzipiellen Aufbau wie die in den FIG 1 und 2 gezeigten Anordnungen.

Bei beiden nutzt die Regelungseinheit R das vorhandene Leistungsteil L zur Ausgabe eines Impulses UR, US, UT auf allen drei Motorphasen R, S und T. Durch einen solchen Impuls bleibt der Motor M stromlos. Durch parasitäre Kapazitäten CP gibt es auf anderen Leitungen Überkopplungen, die durch den Motorgeber G ausgewertet werden können. Auf diese Weise können die vorangehend erwähnten Probleme mit einer sicheren elektrischen Trennung im Motor M überwunden werden. Durch Auslesen des Motorgebers G kann die Regelungseinheit R feststellen, dass der Impuls UR, US, UT aufgetreten ist. Damit ist die Zuordnung bekannt.

FIG 3 zeigt eine Ausführung, die eine Überkopplung auf einen Temperatursensor TS in der Motorwicklung MW nutzt. Der Temperatursensor TS soll im Antriebssystem auf dem Motorgeber G ausgewertet werden. Der Motorgeber G weist also zusätzliche Hardware zur Erkennung einer Überkopplung auf.

Der Temperatursensor TS selbst ist in der Regel nicht sicher elektrisch getrennt. Dieses Prinzip ist auch möglich, wenn bestehende Motoren und Motorgeber verwendet werden. Voraussetzung ist lediglich, dass die Leitungen des Temperatursensors TS im Geberkabel GK geführt werden. In diesem Fall kann eine Geberauswertung den Impuls UR, US, UT erkennen.

Eine zweite mögliche Ausführung zeigt FIG 4. Hier wird die Überkopplung auf eine zusätzliche Leitung SP im Leistungskabel LK genutzt, wobei die zusätzliche Leitung SP vorzugsweise zur Spannungsversorgung des Motorgebers G dient.

Auch in diesem Fall ist auf Seiten des Motorgebers G lediglich eine Hardware zur Erkennung des Impulses nötig. Außerdem tritt bei einer solchen Realisierung kein Problem mit einer sicheren elektrischen Trennung im Motor M auf.

Bei einer solchen vorteilhaften Realisierung nach FIG 1 und entsprechend den voranstehenden Ausführungsbeispielen nach den FIG 3 und 4 sind folgende Aspekte besonders günstig:
- eine Nutzung des vorhandenen Leistungsteils zur Ausgabe eines "3-Phasen-Impulses"
- eine Nutzung von parasitären Kapazitäten zur Überwindung einer 'Sicheren Elektrischen Trennung'

Für den Fall, dass sich auf keine Weise eine elektrische Verbindung X zwischen dem Motor M und dem Motorgeber G herstellen lässt, auch keine optische oder sonstige Signalverbindung, bleibt als Alternative zur Lösung der erfindungsgemäßen Aufgabe folgende in FIG 8 gezeigte Ausführung. Die gezeigte Anordnung entspricht weitgehend der in FIG 1 und FIG 2 gezeigten. Jedoch fehlt die erwähnte Verbindung X.

Dafür ist sowohl im Motorgeber G als auch im Motor M eine (weltweit) eindeutige Kennung vorgesehen, hier der Wert '13572468'. Der Motor M weist dafür eine eigene Kennungsbaugruppe K auf. Die Kennung wird beim Einschalten vom Motor M über das Leistungskabel LK an das Leistungsteil L sowie vom Motorgeber G über das Geberkabel GK übertragen. Durch Auslesen der Kennung aus dem Leistungsteil L kann die Regelungseinheit R die Zuordnung finden.

Diese Lösungsmöglichkeit besitzt als Vorteil:
- der Motorgeber braucht keine Verbindung zur Leistungsleitung zu haben.

Jedoch ergeben sich auch folgende Nachteile:
- eine zusätzliche Kennungsbaugruppe im Motor ist nötig
- ein Aufmodulieren von Signalen auf die Leistungsleitung ist erforderlich oder zusätzliche Leitungen, außerdem wird ein Empfänger im Leistungsteil benötigt
- bei der Fertigung müssen konsistente Kennungen im Motorgeber und in der Kennungsbaugruppe des Motors abgelegt werden.

## Patentansprüche

1. Verfahren zur automatischen Zuordnung eines Motorgebers (G, G1, G2, G3) zu einem Leistungsteil (L, L1, L2, L3) innerhalb eines elektrischen Antriebssystems, wobei aus einer Regelungseinheit (R), dem Leistungsteil (L, L1, L2, L3), einem Motor (M, M1, M2, M3) und dem Motorgeber (G, G1, G2, G3) ein geschlossener Kreis gebildet wird, wobei die Regelungseinheit (R) über das Leistungsteil (L, L1, L2, L3) ein Merkmal (UR, US, UT) überträgt, das über den geschlossenen Kreis aus Leistungsteil (L, L1, L2, L3), Motor (M, M1, M2, M3) und Motorgeber (G, G1, G2, G3) wieder zurück an die Regelungseinheit (R) geleitet wird, wo eine Regelkreisstruktur mit der tatsächlichen Verdrahtung verglichen wird.

2. Verfahren zur automatischen Zuordnung eines Motorgebers (G, G1, G2, G3) zu einem Leistungsteil (L, L1, L2, L3) nach Anspruch 1, wobei als Merkmal ein Impuls (U), insbesondere ein Spannungsimpuls, vorgegeben wird, der eindeutig identifizierbar ist.

3. Verfahren zur automatischen Zuordnung eines Motorgebers (G, G1, G2, G3) zu einem Leistungsteil (L, L1, L2, L3) nach Anspruch 1, wobei als Merkmal ein eindeutiger Kennwert vorgegeben wird.

4. Verfahren zur automatischen Zuordnung eines Motorgebers (G, G1, G2, G3) zu einem Leistungsteil (L, L1, L2, L3) nach Anspruch 2, wobei über das Leistungsteil (L, L1, L2, L3) gleichzeitig auf allen Phasen (R, S, T) des Motors (M, M1, M2, M3) ein identischer Impuls (UR, US, UT) ausgegeben wird.

5. Verfahren zur automatischen Zuordnung eines Motorgebers (G, G1, G2, G3) zu einem Leistungsteil (L, L1, L2, L3) nach Anspruch 4, wobei ein Vergleich der Regelkreisstruktur mit der tatsächlichen Verdrahtung erfolgt, indem die Regelungseinheit (R) den Motorgeber (G, G1, G2, G3) dahingehend auswertet, ob der Impuls (UR, US, UT) aufgetreten ist.

6. Verfahren zur automatischen Zuordnung eines Motorgebers (G, G1, G2, G3) zu einem Leistungsteil (L, L1, L2, L3) innerhalb eines elektrischen Antriebssystems, wobei aus einer Regelungseinheit (R), dem Leistungsteil (L, L1, L2, L3), einem Motor (M, M1, M2, M3) und dem Motorgeber (G, G1, G2, G3) ein geschlossener Kreis gebildet wird, wobei die Regelungseinheit (R) über den Motorgeber (G, G1, G2, G3) ein Merkmal überträgt, das über den geschlossenen Kreis aus Motorgeber (G, G1, G2, G3), Motor (M, M1, M2, M3) und Leistungsteil (L, L1, L2, L3) wieder zurück an die Regelungseinheit (R) geleitet wird, wo die Regelkreisstruktur mit der tatsächlichen Verdrahtung verglichen wird.

7. Verfahren zur automatischen Zuordnung eines Motorgebers (G, G1, G2; G3) zu einem Leistungsteil (L, L1, L2, L3) nach Anspruch 6, wobei als Merkmal ein Impuls (U), insbesondere ein Spannungsimpuls, vorgegeben wird, der eindeutig identifizierbar ist.

8. Verfahren zur automatischen Zuordnung eines Motorgebers (G, G1, G2, G3) zu einem Leistungsteil (L, L1, L2, L3) nach Anspruch 6, wobei als Merkmal ein eindeutiger Kennwert vorgegeben wird.

9. Verfahren zur automatischen Zuordnung eines Motorgebers (G, G1, G2, G3) zu einem Leistungsteil (L, L1, L2, L3) nach einem der vorangehenden Ansprüche 6 bis 8, wobei der Motor (M, M1, M2, M3) und das Leistungsteil (L, L1, L2, L3) über eine Leistungsleitung (LK, LK1, LK2, LK3) verbunden sind, auf die das Merkmal zur Übertragung aufmoduliert wird.

10. Verfahren zur automatischen Zuordnung eines Motorgebers (G, G1, G2, G3) zu einem Leistungsteil (L, L1, L2, L3) nach einem der vorangehenden Ansprüche, wobei Überkopplungen durch parasitäre Kapazitäten (CP) zur Überwindung einer sicheren elektrischen Trennung innerhalb des geschlossenen Kreises genutzt werden.

11. Verfahren zur automatischen Zuordnung eines Motorgebers (G, G1, G2, G3) zu einem Leistungsteil (L, L1, L2, L3) nach einem der Ansprüche 1 bis 5, wobei zur Überwindung einer sicheren elektrischen Trennung zwischen dem Motorgeber (G, G1, G2, G3) und dem Motor (M, M1, M2, M3) ein in der Motorwicklung (MW) angeordneter Temperatursensor (TS) genutzt wird, der von der Regelungseinheit (R) über den Motorgeber (G, G1, G2, G3) auf eine durch eine parasitäre Kapazität (CP) bedingte Überkopplung des Impulses (UR, US, UT) ausgewertet wird.

12. Verfahren zur automatischen Zuordnung eines Motorgebers (G, G1, G2, G3) zu einem Leistungsteil (L, L1, L2, L3) nach einem der Ansprüche 6 bis 9, wobei zur Überwindung einer sicheren elektrischen Trennung zwischen dem Motorgeber (G, G1, G2, G3) und dem Motor (M, M1, M2, M3) ein in der Motorwicklung (MW) angeordneter Temperatursensor (TS) genutzt wird, der von der Regelungseinheit (R) über den Motor (M, M1, M2, M3) und das Leistungsteil (L, L1, L2, L3) auf eine durch eine parasitäre Kapazität (CP) bedingte Überkopplung des Impulses ausgewertet wird.

13. Verfahren zur automatischen Zuordnung eines Motorgebers (G, G1, G2, G3) zu einem Leistungsteil (L, L1, L2, L3) nach Anspruch 10, wobei der Motor (M, M1, M2, M3) über eine Leistungsleitung (LK, LK1, LK2, LK3) mit dem Leistungsteil (L, L1, L2, L3) verbunden ist, wobei der Motorgeber (G, G1, G2, G3) über das Leistungsteil (L, L1, L2, L3) mit Spannung versorgt wird und die Leitungen (SP) zur Spannungsversorgung des Motorgebers (G, G1, G2, G3) ebenfalls in der Leistungsleitung (LK, LK1, LK2, LK3) angeordnet sind, wobei zur Überwindung einer sicheren elektrischen Trennung zwischen dem Motorgeber (G, G1, G2, G3) und dem Motor (M, M1, M2, M3) Überkopplungen durch parasitäre Kapazitäten (CP) zwischen den Leitungen zur Spannungsversorgung des Motors (M, M1, M2, M3) und den Leitungen (SP) zur Spannungsversorgung des Motorgebers (G, G1, G2, G3) innerhalb der Leistungsleitung (LK, LK1, LK2, LK3) genutzt werden.

14. Elektrisches Antriebssystem mit einem Motor (M, M1, M2, M3), einem Leistungsteil (L, L1, L2, L3), einer Regelungseinheit (R) und einem Motorgeber (G, G1, G2, G3), die miteinander so verbunden sind, dass diese einen geschlossenen Kreis bilden, in dem von der Regelungseinheit (R) ein Merkmal (UR, US, UT) so übertragbar ist, dass dieses in eine Richtung des geschlossenen Kreises aussendbar ist und aus der anderen Richtung so detektierbar ist, dass eine Regelkreisstruktur des Antriebssystems mit der tatsächlichen Verdrahtung vergleichbar ist, insbesondere zur Durchführung eines Verfahrens nach einem der vorangehenden Ansprüche.

## Claims

1. Method for automatic allocation of a motor sensor (G, G1, G2, G3) to a power section (L, L1, L2, L3) within an electrical drive system, a closed loop being formed from a control unit (R), the power section (L, L1, L2, L3), a motor (M, M1, M2, M3) and the motor sensor (G, G1, G2, G3), the control unit (R) transmitting a feature (UR, US, UT) via the power section (L, L1, L2, L3), said feature being passed back via the closed loop formed from a power section (L, L1, L2, L3), a motor (M, M1, M2, M3) and a motor sensor (G, G1, G2, G3) to the control unit (R), where a control loop structure is compared to the actual wiring.

2. Method for automatic allocation of a motor sensor (G, G1, G2, G3) to a power section (L, L1, L2, L3) according to claim 1, the feature being a preset pulse (U), in particular a voltage pulse, which can be uniquely identified.

3. Method for automatic allocation of a motor sensor (G, G1, G2, G3) to a power section (L, L1, L2, L3) according to claim 1, the feature being a preset unique characteristic value.

4. Method for automatic allocation of a motor sensor (G, G1, G2, G3) to a power section (L, L1, L2, L3) according to claim 2, an identical pulse (UR, US, UT) being emitted via the power section (L, L1, L2, L3) simultaneously on all phases (R, S, T) of the motor (M, M1, M2, M3).

5. Method for automatic allocation of a motor sensor (G, G1, G2, G3) to a power section (L, L1, L2, L3) according to claim 4, a comparison being made between the control loop structure and the actual wiring, in that the control unit (R) evaluates the motor sensor (G, G1, G2, G3) to determine whether the pulse (UR, US, UT) has occurred.

6. Method for automatic allocation of a motor sensor (G, G1, G2, G3) to a power section (L, L1, L2, L3) within an electrical drive system, a closed loop being formed from a control unit (R), the power section (L, L1, L2, L3), a motor (M, M1, M2, M3) and the motor sensor (G, G1, G2, G3), the control unit (R) transmitting a feature via the motor sensor (G, G1, G2, G3), said feature being passed back via the closed loop formed from a motor sensor (G, G1, G2, G3), a motor (M, M1, M2, M3) and a power section (L, L1, L2, L3) to the control unit (R), where the control loop structure is compared to the actual wiring.

7. Method for automatic allocation of a motor sensor (G, G1, G2, G3) to a power section (L, L1, L2, L3) according to claim 6, the feature being a preset pulse (U), in particular a voltage pulse, which can be uniquely identified.

8. Method for automatic allocation of a motor sensor (G, G1, G2, G3) to a power section (L, L1, L2, L3) according to claim 6, the feature being a preset unique characteristic value.

9. Method for automatic allocation of a motor sensor (G, G1, G2, G3) to a power section (L, L1, L2, L3) according to one of the preceding claims 6 to 8, the motor (M, M1, M2, M3) and the power section (L, L1, L2, L3) being connected via a power line (LK, LK1, LK2, LK3) onto which the feature is modulated for transmission.

10. Method for automatic allocation of a motor sensor (G, G1, G2, G3) to a power section (L, L1, L2, L3) according to one of the preceding claims, having couplings by means of parasitic capacitances (CP) to overcome safe electrical isolation within the closed loop.

11. Method for automatic allocation of a motor sensor (G, G1, G2, G3) to a power section (L, L1, L2, L3) according to one of claims 1 to 5, a temperature sensor (TS) arranged in the motor winding (MW) being used to overcome safe electrical isolation between the motor sensor (G, G1, G2, G3) and the motor (M, M1, M2, M3), said temperature sensor being evaluated by the control unit (R) via the motor sensor (G, G1, G2, G3) for coupling of the pulse (UR, US, UT) caused by a parasitic capacitance (CP).

12. Method for automatic allocation of a motor sensor (G, G1, G2, G3) to a power section (L, L1, L2, L3) according to one of claims 6 to 9, a temperature sensor (TS) arranged in the motor winding (MW) being used to overcome safe electrical isolation between the motor sensor (G, G1, G2, G3) and the motor (M, M1, M2, M3), said temperature sensor being evaluated by the control unit (R) via the motor (M, M1, M2, M3) and the power section (L, L1, L2, L3) for coupling of the pulse caused by a parasitic capacitance (CP).

13. Method for automatic allocation of a motor sensor (G, G1, G2, G3) to a power section (L, L1, L2, L3) according to claim 10, the motor (M, M1, M2, M3) being connected via a power line (LK, LK1, LK2, LK3) to the power section (L, L1, L2, L3), the motor sensor (G, G1, G2, G3) being supplied with voltage via the power section (L, L1, L2, L3), and the lines (SP) for supplying voltage to the motor sensor (G, G1, G2) likewise being arranged in the power line (LK, LK1, LK2, LK3), couplings by means of parasitic capacitances (CP) between the lines for supplying voltage to the motor (M, M1, M2, M3) and the lines (SP) for supplying voltage to the motor sensor (G, G1, G2, G3) within the power line (LK, LK1, LK2, LK3) being used to overcome safe electrical isolation between the motor sensor (G, G1, G2, G3) and the motor (M, M1, M2, M3).

14. Electrical drive system comprising a motor (M, M1, M2, M3), a power section (L, L1, L2, L3), a control unit (R) and a motor sensor (G, G1, G2, G3) which are connected together to form a closed loop, in that a feature (UR, US, UT) can be transmitted by the control unit (R) so that it can be sent in one direction of the closed loop and can be detected from the other direction, so that a control loop structure of the drive system can be compared with the actual wiring, in particular for carrying out a method according to one of the preceding claims.

## Revendications

1. Procédé pour associer automatiquement un capteur de moteur (G, G1, G2, G3) à une partie de puissance (L, L1, L2, L3) à l'intérieur d'un système d'entraînement électrique, dans lequel un circuit fermé est formé à partir d'une unité de régulation (R), de la partie de puissance (L, L1, L2, L3), d'un moteur (M, M1, M2, M3) et du capteur de moteur (G, G1, G2, G3) et dans lequel l'unité de régulation (R) transmet par l'intermédiaire de la partie de puissance (L, L1, L2, L3) une caractéristique (UR, US, UT) qui revient par l'intermédiaire du circuit fermé composé de la partie de puissance (L, L1, L2, L3), du moteur (M, M1, M2, M3) et du capteur de moteur (G, G1, G2, G3) à l'unité de régulation (R) où une structure de circuit de régulation est comparée au câblage réel.

2. Procédé pour associer automatiquement un capteur de moteur (G, G1, G2, G3) à une partie de puissance (L, L1, L2, L3) selon la revendication 1, dans lequel on prescrit comme caractéristique une impulsion (U), notamment une impulsion de tension, qui est identifiable sans équivoque.

3. Procédé pour associer automatiquement un capteur de moteur (G, G1, G2, G3) à une partie de puissance (L, L1, L2, L3) selon la revendication 1, dans lequel on prescrit comme caractéristique une valeur caractéristique unique.

4. Procédé pour associer automatiquement un capteur de moteur (G, G1, G2, G3) à une partie de puissance (L, L1, L2, L3) selon la revendication 2, dans lequel on délivre une impulsion identique (UR, US, UT) par l'intermédiaire de la partie de puissance (L, L1, L2, L3) simultanément sur toutes les phases (R, S, T) du moteur (M, M1, M2, M3).

5. Procédé pour associer automatiquement un capteur de moteur (G, G1, G2, G3) à une partie de puissance (L, L1, L2, L3) selon la revendication 4, dans lequel on effectue une comparaison de la structure de circuit de régulation au câblage réel en faisant en sorte que l'unité de régulation (R) évalue le capteur de moteur (G, G1, G2, G3) pour savoir si l'impulsion (UR, US, UT) est apparue.

6. Procédé pour associer automatiquement un capteur de moteur (G, G1, G2, G3) à une partie de puissance (L, L1, L2, L3) à l'intérieur d'un système d'entraînement électrique, dans lequel un circuit fermé est formé à partir d'une unité de régulation (R), de la partie de puissance (L, L1, L2, L3), d'un moteur (M, M1, M2, M3) et du capteur de moteur (G, G1, G2, G3) et dans lequel l'unité de régulation (R) transmet par l'intermédiaire du capteur de moteur (G, G1, G2, G3) une caractéristique qui revient par l'intermédiaire du circuit fermé composé du capteur de moteur (G, G1, G2, G3), du moteur (M, M1, M2, M3) et de la partie de puissance (L, L1, L2, L3) à l'unité de régulation (R) où la structure de circuit de régulation est comparée au câblage réel.

7. Procédé pour associer automatiquement un capteur de moteur (G, G1, G2, G3) à une partie de puissance (L, L1, L2, L3) selon la revendication 6, dans lequel on prescrit comme caractéristique une impulsion (U), notamment une impulsion de tension, qui est identifiable sans équivoque.

8. Procédé pour associer automatiquement un capteur de moteur (G, G1, G2, G3) à une partie de puissance (L, L1, L2, L3) selon la revendication 6, dans lequel on prescrit comme caractéristique une valeur caractéristique unique.

9. Procédé pour associer automatiquement un capteur de moteur (G, G1, G2, G3) à une partie de puissance (L, L1, L2, L3) selon l'une des revendications précédentes 6 à 8, dans lequel le moteur (M, M1, M2, M3) et la partie de puissance (L, L1, L2, L3) sont reliés par l'intermédiaire d'une ligne de puissance (LK, LK1, LK2, LK3) sur laquelle la caractéristique est modulée pour la transmission.

10. Procédé pour associer automatiquement un capteur de moteur (G, G1, G2, G3) à une partie de puissance (L, L1, L2, L3) selon l'une des revendications précédentes, dans lequel on utilise des surcouplages par des capacités parasitaires (CP) pour surmonter une séparation électrique sûre à l'intérieur du circuit fermé.

11. Procédé pour associer automatiquement un capteur de moteur (G, G1, G2, G3) à une partie de puissance (L, L1, L2, L3) selon l'une des revendications 1 à 5, dans lequel on utilise pour surmonter une séparation électrique sûre entre le capteur de moteur (G, G1, G2, G3) et le moteur (M, M1, M2, M3) un capteur de température (TS) qui est placé dans l'enroulement de moteur (MW) et qui est évalué par l'unité de régulation (R) par l'intermédiaire du capteur de moteur (G, G1, G2, G3) quant à un surcouplage, conditionné par une capacité parasitaire (CP), de l'impulsion (UR, US, UT).

12. Procédé pour associer automatiquement un capteur de moteur (G, G1, G2, G3) à une partie de puissance (L, L1, L2, L3) selon l'une des revendications 6 à 9, dans lequel on utilise pour surmonter une séparation électrique sûre entre le capteur de moteur (G, G1, G2, G3) et le moteur (M, M1, M2, M3) un capteur de température (TS) qui est placé dans l'enroulement de moteur (MW) et qui est évalué par l'unité de régulation (R) par l'intermédiaire du moteur (M, M1, M2, M3) et de la partie de puissance (L, L1, L2, L3) quant à un surcouplage, conditionné par une capacité parasitaire (CP), de l'impulsion.

13. Procédé pour associer automatiquement un capteur de moteur (G, G1, G2, G3) à une partie de puissance (L, L1, L2, L3) selon la revendication 10, dans lequel le moteur (M, M1, M2, M3) est relié par l'intermédiaire d'une ligne de puissance (LK, LK1, LK2, LK3) à la partie de puissance (L, L1, L2, L3), dans lequel le capteur de moteur (G, G1, G2, G3) est alimenté en tension par l'intermédiaire de la partie de puissance (L, L1, L2, L3) et les lignes (SP) pour l'alimentation en tension du capteur de moteur (G, G1, G2, G3) sont également disposées dans la ligne de puissance (LK, LK1, LK2, LK3) et dans lequel, pour surmonter une séparation électrique sûre entre le capteur de moteur (G, G1, G2, G3) et le moteur (M, M1, M2, M3), on utilise des surcouplages par des capacités parasitaires (CP) entre les lignes pour l'alimentation en tension du moteur (M, M1, M2, M3) et les lignes (SP) pour l'alimentation en tension du capteur de moteur (G, G1, G2 G3) à l'intérieur de la ligne de puissance (LK, LK1, LK2, LK3).

14. Système d'entraînement électrique comportant un moteur (M, M1, M2, M3), une partie de puissance (L, L1, L2, L3), une unité de régulation (R) et un capteur de moteur (G, G1, G2, G3), lesquels sont reliés ensemble de manière à former un circuit fermé dans lequel une caractéristique (UR, US, UT) peut être transmise par l'unité de régulation (R) de telle sorte que cette caractéristique peut être émise dans un sens du circuit fermé et peut être détectée dans l'autre sens de telle sorte qu'une structure de circuit de régulation du système d'entraînement est comparable au câblage réel, notamment pour la mise en oeuvre d'un procédé selon l'une des revendications précédentes.
